# EUROPÄISCHE PATENTSCHRIFT

(11) **EP 1 097 441 B1**
(45) Veröffentlichungstag und Bekanntmachung des Hinweises auf die Patenterteilung: **10.04.2002**
(21) Anmeldenummer: 99936168.6
(22) Anmeldetag: 22.07.1999
(51) Int. Cl.: G09B 29/04

(54) **INFORMATIONS- ODER WERBETRÄGEREINRICHTUNG**
DEVICE FOR DISPLAYING INFORMATION OR ADVERTISING
DISPOSITIF DE SUPPORT D'INFORMATIONS OU DE PUBLICITE

(30) Priorität: 22.07.1998 AT 126598
(43) Veröffentlichungstag der Anmeldung: 09.05.2001
(73) Patentinhaber: Finke, Rolf, 5323 Ebenau (AT)
(72) Erfinder: Finke, Rolf, 5323 Ebenau (AT)
(74) Vertreter: Holzer, Walter, Dipl.-Ing.
(86) Internationale Anmeldenummer: AT9900184
(87) Internationale Veröffentlichungsnummer: WO0005698

(56) Entgegenhaltungen:
- WO-A-94/25286
- WO-A-96/28307
- WO-A-98/25255
- GB-A- 2 262 475
- GB-A- 2 263 885
- GB-A- 2 317 588

## Beschreibung

Die Erfindung betrifft eine Informations- oder Werbeträgereinrichtung, mit einem Faltblatt aus Papier, Kunststoff od.dgl., das im gefalteten Zustand im wesentlichen rechteckiges ISO-Norm-Kartenformat hat und auf der Vorder- und Hinterseite des Faltkonvolutes mit relativ zum Faltblatt steiferen Deckblättern aus Karton, Kunststoff od.dgl. versehen ist, wobei das Faltblatt an der Innenseite des einen Deckblattes befestigt ist, wogegen das andere Deckblatt mit einem weiteren Blatt einstückig verbunden ist, welches mit dem Deckblatt einer Aufnahmetasche für eine Karte, insbesondere Kreditkarte od.dgl. bildet, wobei an zumindest einem Rand der Aufnahmetasche ein seitlicher Schlitz zum Einschieben der Karte in die Aufnahmetasche vorgesehen ist.

Derartige Einrichtungen sind in den verschiedensten Ausführungen als Vorteilskataloge, Informationsblätter, Prospekte, Ortspläne u.dgl. bekannt, die wegen ihres kleinen Formates in Brieftaschen u.dgl. mitgeführt werden können. Bei einer dieser bekannten Ausführungsformen (z.B. EP 0 288 472 oder WO94/25286) sind Deckblätter aus Karton an den einander diagonal gegenüberliegenden Ekken des entfalteten Faltblattes angeordnet. Die zusammengelegte Einrichtung kann durch Ergreifen der beiden Deckblätter mit dem dazwischen liegenden gefalteten Blatt etwa zieharmonikaartig mit einer einzigen Bewegung entfaltet werden. Da die Blattfalten permanent ausgebildet sind, kann das Blatt nach dem Gebrauch leicht wieder zusammengefaltet werden. Der wesentliche Nachteil dieser Konstruktion besteht darin, daß sich die Deckblätter beim Einstecken der Einrichtung z.B. in den engen Kartenschlitz von Brieftaschen u.dgl. gegeneinander verschieben, wodurch die Faltungen des Faltblattes Schaden nehmen und ein rasches sowie genaues Auseinander- und Zusammenfalten der Einrichtung nicht mehr möglich ist.

Die vorliegende Erfindung zielt nun darauf ab, eine Einrichtung der einleitend angegebenen Art zu schaffen, die eine einwandfreie Formhaltigkeit des Faltblattes gewährleistet und zugleich als sichere Aufnahme für eine z.B. aus Kunststoff bestehende Karte, wie Scheckkarte, Kreditkarte u.dgl., im ISO-Format (86 x 54 mm) dient. Die erfindungsgemäße Einrichtung zeichnet sich dadurch aus, daß die das Faltblatt zwischeneinander aufnehmenden Deckblätter, wie an sich bekannt, durch einen Faltrücken miteinander verbunden sind, daß der Faltrücken an der Längsseite der Deckblätter vorgesehen ist, und daß das die Aufnahmetasche bildende Blatt an der Innenseite des zugeordneten Deckblattes angeordnet und mit dem Deckblatt über zumindest eine randseitige Klebelasche verbunden ist.

Vorzugsweise ist das Innenblatt an einer Längsseite und an zumindest einer Schmalseite mit je einer Klebelasche ausgestattet.

Nach einem weiteren Erfindungsmerkmal ist das Innenblatt mit einem Sichtfenster versehen.

Durch die erfindungsgemäße Ausbildung bildet der Längsfaltrücken eine kräftige Führungskante beim Einstecken der Einrichtung in enge Schlitze von Brieftaschen, Geldbörsen u.dgl. und verhindert dadurch ein Verschieben des innenliegenden Faltblattes, dessen Faltungen auf diese Weise geschützt bleiben. Die Verklebung der Aufnahmetasche gewährleistet darüber hinaus eine sichere Aufnahme einer Kreditkarte od.dgl.

Die Erfindung wird nachfolgend an Ausführungsbeispielen unter Bezugnahme auf die Zeichnungen näher erläutert, in welchen zeigen:
Fig. 1 eine Draufsicht auf die ausgebreitete Einrichtung vor dem Einkleben des Innenblattes und des Faltblattes;
Fig. 2 eine Ansicht der geöffneten Einrichtung nach Fig. 1, und
Fig. 3 eine andere Ausführungsform der Erfindung.

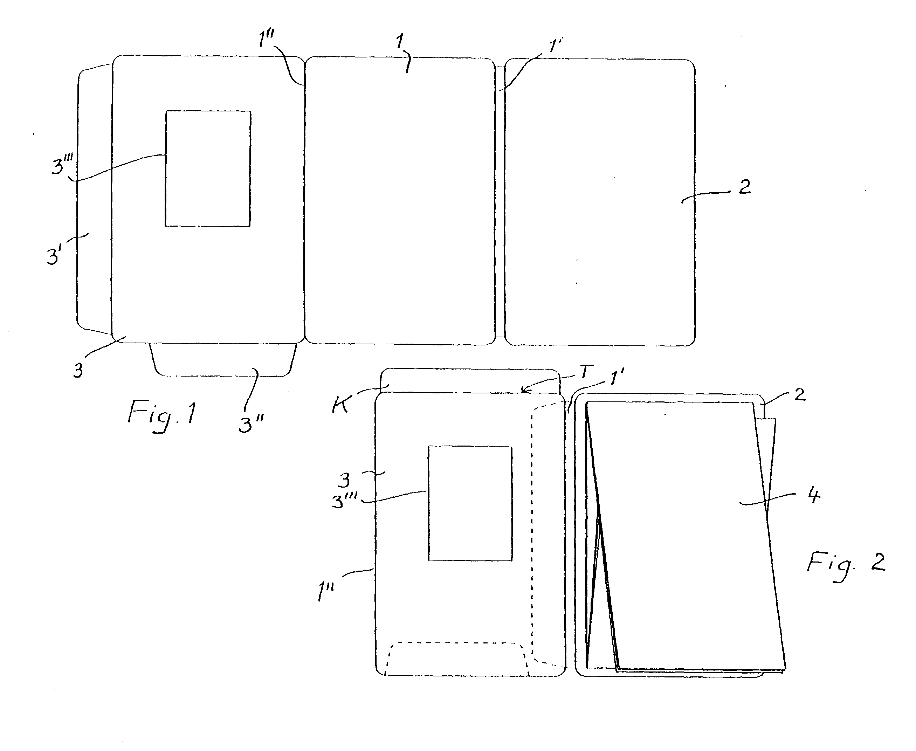

Gemäß Fig. 1 weist die dargestellte Einrichtung 3 drei einstückig ausgebildete und über Faltlinien miteinander verbundene rechteckige Deckblätter 1, 2, 3 aus Karton, Kunststoff od.dgl. auf, wobei die Deckblätter 1, 2 an ihren Schmalseiten über einen Faltrücken 1' aneinander angelenkt sind, wogegen das Deckblatt 3 mit dem Deckblatt 1 über eine längsseitige Faltlinie 1" verbunden und auf dieses nach innen klappbar ist. Das Deckblatt 3 wird mit dem Deckblatt 1 mittels einer Klebelasche 3' und einer Klebelasche 3" an der Längsseite und an einer Schmalseite verklebt, so daß eine sichere Aufnahmetasche T zum Einschieben einer Kreditkarte K od.dgl. aus relativ steifem Material, wie Kunststoff, entsteht. Das Deckblatt 3 hat ein Fenster 3"', durch welches die Karte K sichtbar bleibt.

Auf die Innenseite des Deckblattes 2 wird ein Faltblatt 4 aus Papier oder Kunststoff geklebt, das aus einer vorbestimmten Anzahl von durch permanente Falten gebildete Reihen und Spalten von Abschnitten besteht, die im wesentlichen zieharmonikaartig zusammenfaltbar sind, so daß das gefaltete Konvolut zwischen die relativ steiferen Deckblätter 1, 2 paßt.

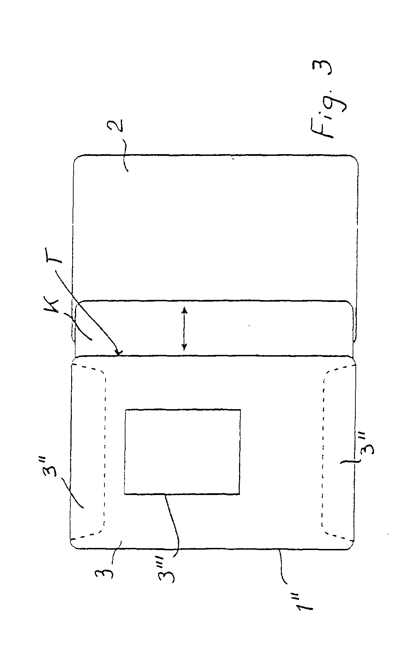

Gemäß Fig. 3 kann das Deckblatt 2 mit dem Deckblatt 1 auch über zwei Klebelaschen 3" an den Schmalseiten verbunden sein, wobei die Karte K von der Innenseite der Einrichtung her in die Aufnahmetasche T eingeschoben wird.

Es versteht sich, daß die beschriebenen Ausführungsbeispiele im Rahmen der Erfindung verschiedentlich abgewandelt werden können. So kann auch eine andere Art der Verbindung zwischen dem einen Deckblatt und dem Innenblatt vorgesehen werden, z.B. eine form- und kraftschlüssige.

## Patentansprüche

1. Informations- oder Werbeträgereinrichtung, mit einem Faltblatt aus Papier, Kunststoff od.dgl., das im gefalteten Zustand im wesentlichen rechteckiges ISO-Norm-Kartenformat hat und auf der Vorder- und Hinterseite des Faltkonvolutes mit relativ zum Faltblatt steiferen Deckblättern aus Karton, Kunststoff od.dgl. versehen ist, wobei das Faltblatt an der Innenseite des einen Deckblattes befestigt ist, und wobei die das Faltblatt (4) zwischeneinander aufnehmenden Deckblätter (1, 2), wie an sich bekannt, durch einen Faltrücken (1') miteinander verbunden sind, daß der Faltrücken (1') an der Längsseite der Deckblätter (1, 2) vorgesehen ist, **dadurch gekennzeichnet, daß** ein Deckblatt mit einem weiteren Blatt (3) einstückig verbunden ist, welches mit dem Deckblatt einer Aufnahmetasche (T) für eine Karte, insbesondere Kreditkarte od.dgl. bildet, wobei an zumindest einem Rand der Aufnahmetasche ein seitlicher Schlitz zum Einschieben der Karte in die Aufnahmetasche vorgesehen ist und daß das die Aufnahmetasche (T) bildende Blatt (3) an der Innenseite des zugeordneten Deckblattes (2) angeordnet und mit dem Deckblatt (2) über zumindest eine randseitige Klebelasche (3') verbunden ist.

2. Einrichtung nach Anspruch 1, **dadurch gekennzeichnet, daß** das Innenblatt (3) an einer Längsseite und an zumindest einer Schmalseite mit je einer Klebelasche (3', 3") ausgestattet ist.

3. Einrichtung nach Anspruch 1 oder 2, **dadurch gekennzeichnet, daß** das Innenblatt (3) mit einem Sichtfenster (3"') versehen ist.

## Claims

1. Device for holding information or advertising, comprising a folded sheet made of paper, plastic or the like which is of substantially rectangular ISO card size in the folded state and is provided on the front and rear of the folded bundle with cover sheets made of cardboard, plastic or the like which are stiffer than the folded sheet, the folded sheet being fixed to the inner face of one cover sheet and the cover sheets (1, 2) receiving the folded sheet (4) between them being joined together in a manner known per se by means of a folding spine (1') provided on the longitudinal sides of the cover sheets (1, 2), **characterised in that** one cover sheet is joined in one piece to another sheet (3) which, together with the cover sheet, forms a pocket (T) for receiving a card, in particular a credit card or the like, a lateral slit being provided on at least one edge of the pocket for inserting the card into the pocket, and that the sheet (3) forming the pocket (T) is arranged on the inner face of the associated cover sheet (2) and is joined to the cover sheet (2) by means of at least one edge-side adhesive tab (3').

2. Device according to claim 1, **characterised in that** the inner sheet (3) is provided on one longitudinal side and on at least one narrow side with respective adhesive tabs (3', 3").

3. Device according to claim 1 or claim 2, **characterised in that** the inner sheet (3) is provided with a display window (3"').

## Revendications

1. Dispositif de support d'information ou de publicité, comportant un dépliant en papier, en matière plastique ou similaire qui, à l'état plié, possède le format d'une carte normalisée ISO sensiblement rectangulaire et qui est pourvu, sur la face antérieure et sur la face postérieure du fascicule pliant, de pages de garde en carton, en matière plastique ou similaire plus rigides que le dépliant, le dépliant étant fixé sur la face intérieure de l'une des pages de garde, et les pages de garde (1, 2) qui reçoivent entre elles le dépliant (4) étant reliées l'une à l'autre de manière connue par un dos pliant (1'), le dos pliant (1') étant prévu sur le grand côté des pages de garde (1, 2), **caractérisé en ce qu'**une page de garde est reliée d'un seul tenant avec une autre feuille (3) qui forme avec la page de garde une poche réceptrice (T) pour une carte, en particulier une carte de crédit ou similaire, une fente latérale étant prévue sur au moins un bord de la poche réceptrice pour insérer la carte dans la poche réceptrice, et **en ce que** la feuille (3) formant la poche réceptrice (T) est agencée sur la face intérieure de la page de garde (2) associée et est reliée à la page de garde (2) par au moins une patte de collage (3') située sur le côté du bord.

2. Dispositif selon la revendication 1, **caractérisé en ce que** la feuille intérieure (3) est équipée d'une patte de collage respective (3', 3") sur un grand côté et sur au moins un petit côté.

3. Dispositif selon l'une ou l'autre des revendications 1 et 2, **caractérisé en ce que** la feuille intérieure (3) est pourvue d'une fenêtre d'observation (3''').
